# EUROPEAN PATENT SPECIFICATION

(11) **EP 2 023 559 B1**
(45) Date of publication and mention of the grant of the patent: **23.02.2011**
(21) Application number: 08014072.6
(22) Date of filing: 06.08.2008
(51) Int. Cl.: H04L 5/00, H04W 72/12

(54) **Radio communication system**
Funkkommunikationssystem
Système de communications radio

(30) Priority: 08.08.2007 JP 2007206523
(43) Date of publication of application: 11.02.2009
(73) Proprietor: NEC Corporation, Minato-ku Tokyo 108-8001 (JP)
(72) Inventor: Kitajima, Tasuku, Tokyo 108-8001 (JP)
(74) Representative: Töpken, Enno

(56) References cited:
- US-A1- 2004 190 482
- SAAD G KIANI ET AL: "Maximizing Multicell Capacity Using Distributed Power Allocation and Scheduling" IEEE WIRELESS COMMUNICATIONS AND NETWORKING CONFERENCE, 11 March 2007 (2007-03-11), - 15 March 2007 (2007-03-15) pages 1690-1694, XP031097456 NJ, USA ISBN: 978-1-4244-0658-6

## Description

This application is based upon and claims the benefit of priority from Japanese patent application No. 2007-206523, filed on August 8, 2008.

### TECHNICAL FIELD

The present invention relates to a radio communication system based on orthogonal frequency division multiple access (OFDMA).

### BACKGROUND ART

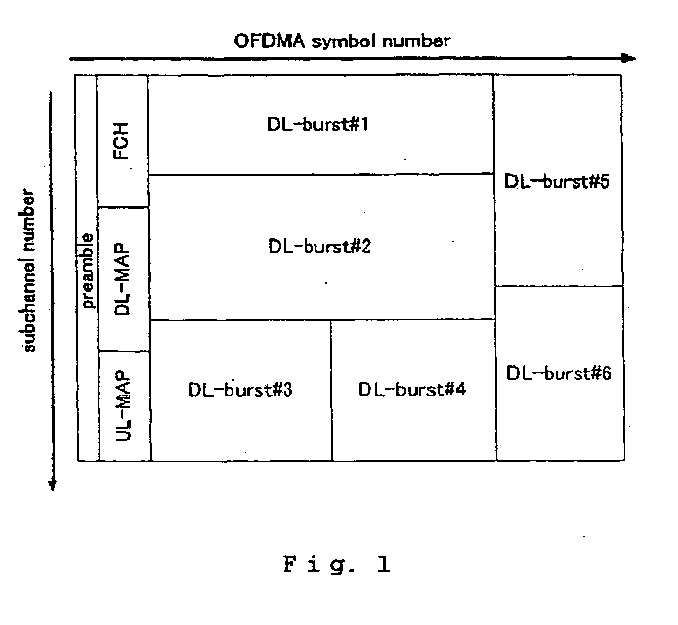

In a typical OFDMA-based radio communication system, a frame containing user data addressed for a plurality of users is transmitted from a base station (BS) in a forward direction. Here, the term "forward direction" refers to the direction of data transmission from a base station to a terminal station (MS). FIG. 1 shows a configuration of a conventional frame (downlink sub-frame) used for transmission of user data in the forward direction.

FIG. 1 is a schematic diagram showing a configuration of a frame used in a conventional OFDMA-based radio communication system.

In FIG. 1, the vertical axis is a frequency axis, and the horizontal axis is a time axis. Groups (subchannels) of a plurality of sub-carriers are arranged along the frequency axis, and OFDMA symbols are arranged along the time axis.

As shown in FIG. 1, a frame used in the OFDMA system includes a preamble, a frame control header (FCH), an uplink (UL) map, a downlink (DL) map, and downlink burst (DL-burst) section (including DL-burst #1, DL-burst #2, ..., DL-burst #6 and so on).

The preamble is predetermined fixed data used for detection of a leading edge of the frame, measurement of the reception quality or the like.

The FCH is information for informing each MS of the modulation method, the coding method or the like used for the following DL map and UL map so that those map regions can be properly read.

The downlink burst section is a region for user data to be transmitted in the downlink direction (forward direction) to each MS. In the example shown in FIG. 1, different user data are assigned to DL-burst #1, DL-burst #2, ..., and DL-burst #6, respectively. The configuration of the downlink burst section is not limited to the configuration that includes DL-burst #1, DL-burst #2, ..., and DL-burst #6 shown in FIG. 1 and can be appropriately modified depending on the number of MSs in communication, the order of priority among the MSs, the transmission rate required by each MS or the like.

The DL map is information for designating the position (frequency region and time) of user data for each MS to be transmitted in the downlink direction (forward direction) in the downlink burst section. The UL map is information for designating the position (frequency region and time) of user data for each MS to be transmitted in an uplink direction (the direction from an MS to a BS) in a burst section. The OFDMA system including the frame configuration shown in FIG. 1 is described in detail in IEEE Standard 802. 16-2004, IEEE Standard for Local and Metropolitan Area Networks Part 16: Air interface for Fixed Broadband Wireless Access Systems (referred to as Non-patent Document 1 hereinafter) and IEEE Standard 802. 16e-2005, Amendment to IEEE Standard for Local and Metropolitan Area Networks Part 16: Air interface for Fixed Broadband Wireless Access Systems for Physical and Medium Access Control Layers for Combined Fixed and Mobile Operation in Licensed Bands (referred to as Non-patent Document 2 hereinafter).

In the radio communication system in which such a frame is used for transmission and reception of user data between BSs and MSs, data transmitted from a BS in a cell is valid to the BS but becomes a source of interference for a BS in another cell adjacent to the cell.

As methods of preventing interference with an adjacent cell, there are known methods of a first division type that divides the all of the channels used in a cell in terms of frequency and assigns a different frequency region to each BS, and methods of a second division type that divides the all of the channels used in a cell in terms of time and assigns a different transmission time to each BS.

According to a method of the first division type, the frequency region used by each BS is switched in a random hopping pattern so that each BS equally uses a plurality of frequency regions. If the amount of load on a peripheral cell is low, this method can effectively prevent interference because the probability that the cell and the peripheral cell share the same frequency region is low. However, if the amount of load on a peripheral cell is high, this method cannot effectively prevent interference because the probability that the cell and the peripheral cell share the same frequency region is high.

On the other hand, according to a method of the second division type, the BSs share the channel assignment information, a different transmission time is assigned to each BS, and a BS that is out of turn for transmission is assigned a frequency region different from that of an adjacent BS. However, according to this method, each BS always has to monitor the channel assignment to the other BSs, and if a BS shares a channel with another BS, another channel has to be reassigned to the BS, so that the channel assignment process is complicated.

As a solution to the problems with the methods of the two division types described above, there is described in Japanese Patent Laid-Open No. 2005-080286 (referred to as Patent Document 1 hereinafter) a technique that prevents inter-cell interference by dividing data to be transmitted from each BS into control information and user data and by assigning a preset frequency region (sub-carrier) to an MS that exists in a handoff region when transmitting the user data.

According to the technique described in the Patent Document 1, a plurality of cells are classified according to the positional relationship therebetween, a predetermined pattern is assigned to each cell based on the result of the classification, the BSs to which different patterns are assigned transmit the control information at different points in time, and the BSs to which the same pattern is assigned transmit the control information at the same point in time. Each BS transmits user data for each MS independently of the assigned pattern once the BS completes transmission of the control information.

According to the technique described in the Patent Document 1, since a sub-carrier is assigned to each cell so that interference between adjacent cells is minimized, the transmission capacity of each cell can be increased. In addition, since the BS can transmit the user data to each MS at the transmission rate required by the MS unless the MS exists in the handoff region, the MSs can equally use the transmission resource while coping with an instantaneous load increase.

However, the technique described in the Patent Document 1 has a problem in which the transmission efficiency of the control information is low because each BS transmits the control information at a different point in time.

In addition, although the technique described in Patent Document 1 assigns a sub-carrier to an MS that exists in the vicinity of a cell edge, which is a boundary between the cell and an adjacent cell, in such a manner that interference with another cell described above is minimized, the technique does not take into consideration a configuration in which a cell is divided into a plurality of cells. Therefore, another sector in the same cell can interfere with an MS existing in the vicinity of a sector edge which is a boundary between sectors in one cell.

In addition, according to the technique described in Patent Document 1, user data is transmitted without being separated from the other user data along the time axis, and therefore, a predetermined sub-carrier is assigned to an MS that has been communicating a certain time. Therefore, the technique has a problem that the transmission efficiency of the user data is low.

The same problem can be concluded from the technique described in patent document US 2004190482.

### SUMMARY

Thus, an object of the present invention is to provide a radio communication system that reduces inter-sector interference or inter-cell interference at a terminal station that exists in an interference region and that has a high transmission efficiency.

In order to attain the object described above, an exemplary aspect of the invention provides a radio communication system based on an OFDMA system, comprising a base station that is provided for each sector and that communicates with a terminal station by radio, in which the base station transmits user data to the terminal station using a frame that is divided along a time axis into: a segment region used for transmission of the user data to a terminal station that exists in a sector edge or a cell edge, in which a different subchannel is assigned to each sector; and a non-segment region used for transmission of the user data to a terminal station that does not exist in the sector edge or the cell edge.

Furthermore, an exemplary aspect of the invention provides a radio communication system based on an OFDMA system, comprising a base station that is provided for each sector and that communicates with a terminal station by radio, in which the base station transmits user data to the terminal station using: a segment symbol, which is a frame including a segment region used for transmission of the user data to a terminal station that exists in a sector edge or a cell edge, in which a different subchannel is assigned to each sector; and a non-segment symbol, which is a frame including a non-segment region used for transmission of the user data to a terminal station that does not exist in the sector edge or the cell edge.

The above and other objects, features, and advantages of the present invention will become apparent from the following description with reference to the accompanying drawings, which illustrate examples of the present invention.

### BRIEF DESCRIPTION OF THE DRAWINGS

FIG. 1 is a schematic diagram showing a configuration of a frame used in an OFDMA-based radio communication system;
FIG. 2 is a schematic diagram showing a configuration of a frame used in a radio communication system according to a first exemplary embodiment;
FIG. 3 includes schematic diagrams showing configuration of frames used for different sectors;
FIG. 4 is a schematic diagram showing an example of a 3-sectors-per-cell radio communication system;
FIG. 5 is a block diagram showing a configuration of the radio communication system;
FIG. 6 is a block diagram showing a configuration of a BS shown in FIG. 5;
FIG. 7 is a flowchart for illustrating a procedure conducted by a scheduling device shown in FIG. 5 according to the first exemplary embodiment; and
FIG. 8 is a schematic diagram showing a configuration of a frame used in a radio communication system according to a second exemplary embodiment.

### EXEMPLARY EMBODIMENT

In the following, the present invention will be described with reference to the drawings.

### (First exemplary embodiment)

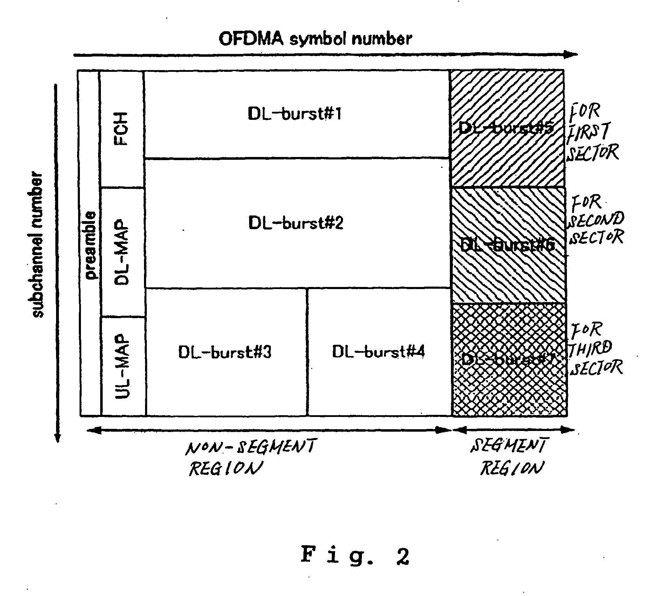

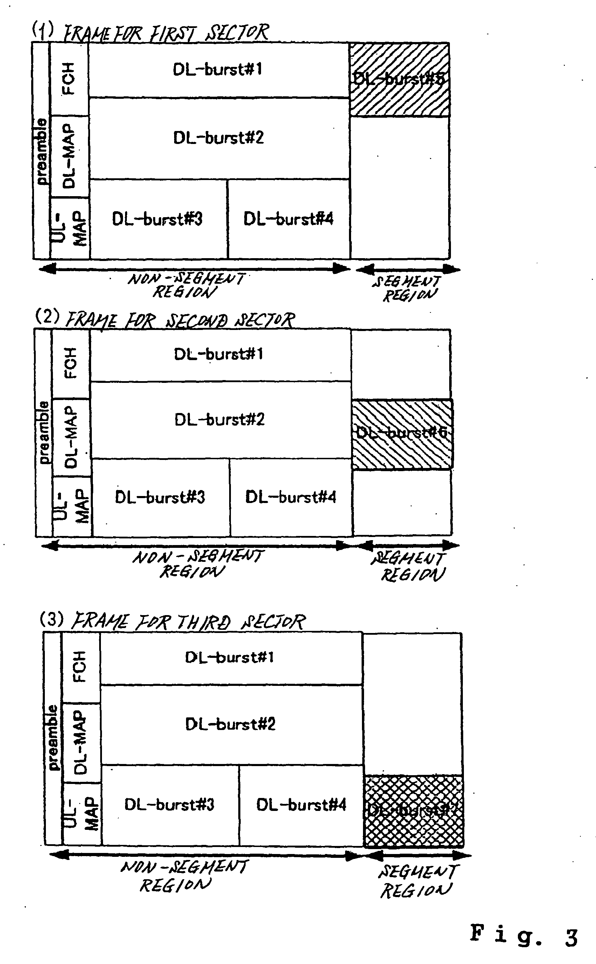

FIG. 2 is a schematic diagram showing a configuration of a frame used in a radio communication system according to a first exemplary embodiment, and FIG. 3 includes schematic diagrams showing configurations of frames used for different sectors. FIGS. 2 and 3 show configurations of downlink sub-frames used for transmission of user data in the forward direction in the radio communication system that divides each cell into three sectors. However, the cell is not always divided into three sectors and can be divided into six sectors, for example.

As shown in FIG. 2, the frame used in the radio communication system according to the first exemplary embodiment includes a downlink burst section used for transmission of user data, and the downlink burst section is divided along the time axis into a segment region and a non-segment region.

The segment region is a region of the downlink burst section used for transmission of user data to an MS that exists in a sector edge or a cell edge (referred to as interference region hereinafter). The non-segment region is a region of the downlink burst section used for transmission of user data to an MS that does not exist in the interference region. The non-segment region is used also for transmission of control information (a preamble, an FCH, a UL map and a DL map) to each MS. FIG. 2 shows an example in which DL-bursts #1 to #4 of the downlink burst section are assigned to the non-segment region, and DL-bursts #5 to #7 of the downlink burst section are assigned to the segment region.

As shown in FIG. 3, in the segment region, the sub-carriers used for the cell are divided into the number of sectors, and each sector uses a different sub-carrier. FIGS. 2 and 3 show an example in which DL-burst #5 of the downlink burst section is used exclusively for a first sector, DL-burst #6 of the downlink burst section is used exclusively for a second sector, and DL-burst #7 of the downlink burst section is used exclusively for a third sector. Since each sector uses a different sub-carrier in this way, an inter-sector interference or an inter-cell interference at an MS that exists in the interference region can be prevented.

It is known that, even when an inter-cell interference occurs at an MS that exists at a cell edge, the MS can detect the control information shown in FIGS. 2 and 3 to some degree. Therefore, in the radio communication system according to the present invention, the control information is transmitted simultaneously to the sectors.

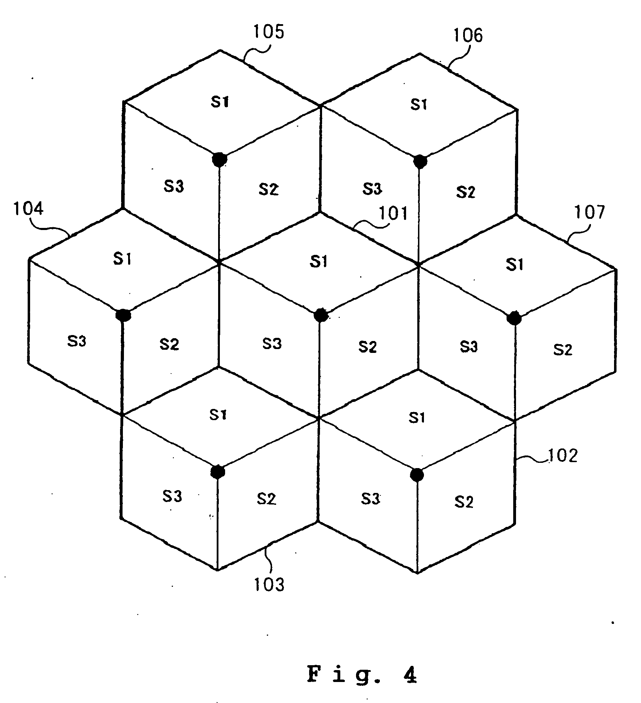

In addition, in the radio communication system according to this exemplary embodiment, in order to minimize inter-sector interference or inter-cell interference at an MS existing in the interference region, the segment region is allocated among the sectors in such a manner that neither adjacent sectors in a cell nor adjacent sectors of adjacent cells share the same subchannel. FIG. 4 shows an arrangement of sectors that minimizes inter-sector interference or inter-cell interference.

FIG. 4 shows an arrangement of sectors of a 3-sectors-per-cell radio communication system, in which cells 102 to 107 adjacent to each other are arranged around cell 101, and cells 101 to 107 are each divided into three sectors S1, S2 and S3.

In the radio communication system shown in FIG. 4, all the channels used for a cell are divided into three resource blocks (subchannels), one subchannel is assigned to each sector S1, S2, S3 in a one-to-one correspondence, and the sectors are arranged in such a manner that any sector of a cell does not share the same subchannel with a sector of an adjacent cell. In other words, sectors S1, S2 and S3 of cell 101 are not adjacent to any sector of other cells 102 to 107 that is assigned the same sector number.

Since the sectors are arranged in such a manner that neither adjacent sectors in a cell nor adjacent sectors of adjacent cells share the same subchannel in this way, inter-sector interference or inter-cell interference at an MS existing in the interference region is minimized, and therefore, the transmission capacity of each sector increases.

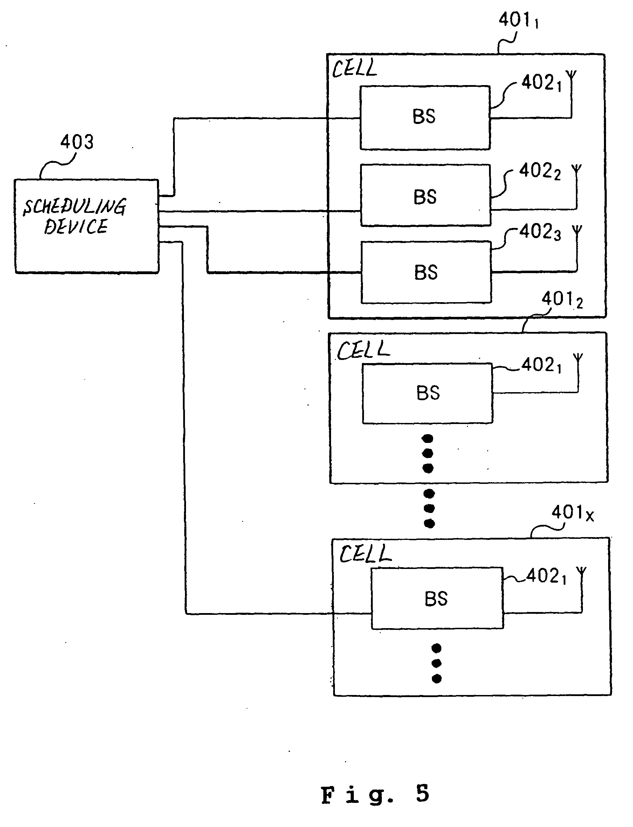

FIG. 5 is a block diagram showing a configuration of the radio communication system.

As shown in FIG. 5, the radio communication system includes BSs 402₁ to 402₃ provided for three sectors forming each of cells 401₁ to 401_{X} (X represents a positive integer); and scheduling device 403 that is connected to BSs 402₁ to 402₃ provided in each of cells 401₁ to 401_{X} and that controls assignment of a subchannel used for transmission and reception of user data. In the following description, cells 401₁ to 401_{X} will be generically referred to as cell 401, and BSs 402₁ to 402₃ will be generically referred to as BS 402.

According to this exemplary embodiment, according to an instruction from BS 402, the MS (not shown) measures the reception quality of frames received from the BS that administers the service area (sector) in which the MS exists (referred to as administering BS hereinafter) and from the BS that administers an adjacent service area (sector) and informs the administering BS of the measurement result. More specifically, the MS measures the CINR (Carrier to Interference and Noise Ratio) value of the signal received from BS 402 as the reception quality. Measuring methods for the CINR value are described in Japanese Patent Laid-Open Nos. 2005-204307 and 2006-014295 and the section "8.4.11.3 CINR mean and standard deviation" of Non-patent Documents 1 and 2, for example.

BS 402 acquires the measurement result of the reception quality from each MS in the sector administered by the BS itself (referred to as allocated sector hereinafter) and determines whether or not there is an MS existing in the interference region in the allocated sector. Then, BS 402 calculates the number of MSs existing in the interference region and reports the calculation result to scheduling device 403 as positional statistics information.

Based on the positional statistics information reported from each BS 402, scheduling device 403 determines the number of subchannels in the segment region to be assigned to each BS 402 and informs each BS 402 of the number of subchannels.

BS 402 configures the segment region and the non-segment region of the downlink burst section according to the information from scheduling device 403 and assigns the subchannels in the segment region used for the allocated sector to the MSs that exist in the interference region and the subchannels in the non-segment region to the MSs that do not exist in the interference region.

As shown in FIG. 3, the segment region always includes an unused frequency region (sub-carrier). Therefore, BS 402 allocates the transmission power for the sub-carrier that is not used in the BS to the sub-carrier that is used in the BS. Therefore, according to the present invention, even for the segment region, a modulation method preformed at a high transmission rate can be used for transmission of user data.

For example, the number of subchannels in the segment region can be equal to the number of the interfering MSs. If there is no MS existing in the interference region, or if any MS existing in the interference region does not intend to communicate with BS 402, the subchannels in the segment region can be allocated to an MS that does not exist in the interference region.

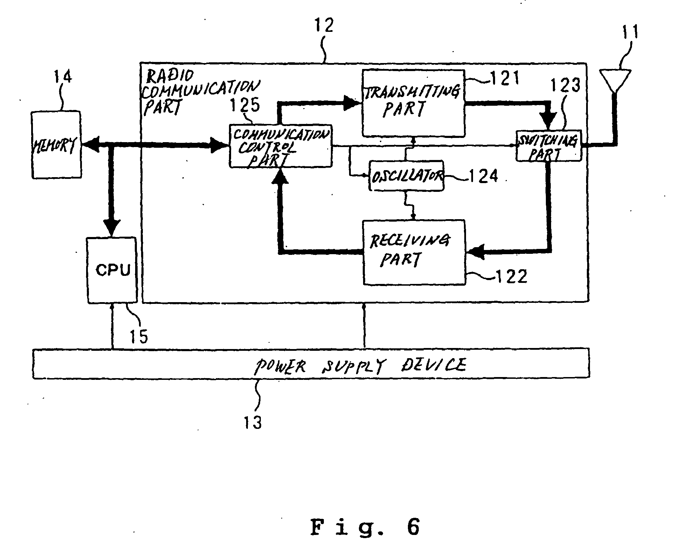

FIG. 6 is a block diagram showing configuration of BS 402 shown in FIG. 5.

As shown in FIG. 6, BS 402 includes antenna device 11, radio communication part 12, power supply device 13, memory 14 and CPU 15.

CPU 15 controls the entire operation of the BS according to a program stored in memory 14, for example.

Memory 14 stores data to be transmitted from the BS to an MS or data received from an MS.

Power supply device 13 supplies a desired power supply voltage to each device (radio communication part 12, memory 14 and CPU 15) in the BS.

Radio communication part 12 includes transmitting part 121 that modulates transmission data into a radio frequency (RF) signal by frequency conversion and transmits the RF signal by amplifying the RF signal to a power required for transmission, receiving part 122 that amplifies the received RF signal and demodulates the signal into a base band signal by frequency conversion, switching part 123 that outputs the RF signal from transmitting part 121 to antenna device 11 when transmitting data and outputs the RF signal received at antenna device 11 to receiving part 122 when receiving data, oscillator 124 that produces a local signal required for the frequency conversion conducted by transmitting part 121 and receiving part 122, and communication control part 125 that performs desired processing (coding, decoding, error correction, or the like) on transmitted or received data and that controls the communication operation of radio communication part 12 according to the OFDMA system.

Transmitting part 121 includes a mixer used in a well-known modulating circuit or used for frequency conversion, a power amplifier that amplifies the RF signal and the like. Receiving part 122 includes a mixer used in a well-known modulating circuit or used for frequency conversion, a low-noise amplifier that amplifies the received RF signal and the like. Communication control part 125 includes an A/D (analog to digital) converter or a D/A (digital to analog) converter, a memory, an LSI or DSP including various kinds of logic circuits, and the like. Communication control part 125 excluding the A/D converter or D/A converter can be implemented by processing performed by CPU 15 according to a program. The MS essentially includes the same components as the BS shown in FIG. 6 and further includes a user interface, such as a speaker, a display and a manipulation button. Scheduling device 403 is implemented by a computer, such as a server device.

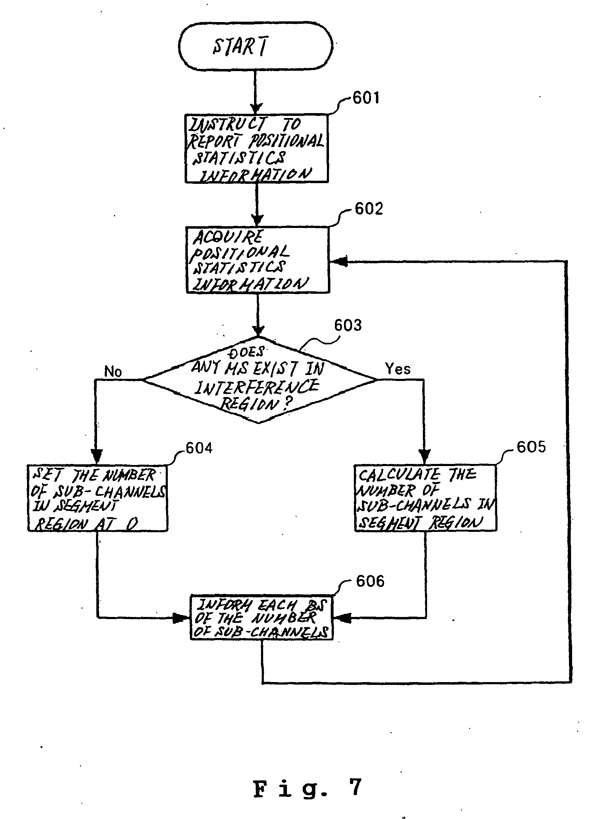

Now, an operation of the radio communication system according to this exemplary embodiment will be described with reference to FIG. 7.

FIG. 7 is a flowchart for illustrating a procedure conducted by the scheduling device shown in FIG. 5.

As shown in FIG. 7, scheduling device 403 first instructs BS 402 for each sector to report the positional statistics information of the allocated sector at every predetermined cycle (step 601). Then, in order to determine whether each MS in the allocated sector exists in the interference region or not, BS 402 instructs each MS to inform the BS of the CINR value of the BS and the CINR value of the BS for an adjacent sector (referred to as adjacent BS hereinafter). Specifically, BS 402 transmits a frame referred to as MOB_SCN-RSP (see the Non-patent Document 1) prescribed according to the OFDMA to each MS in the allocated sector. Each MS measures the CINR value of the BS that transmits the frame thereto (referred to as administering BS hereinafter) and the CINR value of the adjacent BS and reports the measurement result to the administering BS using the frame referred to as MOB_SCN-REP (see the Non-patent Document 1) prescribed according to the OFDMA.

Based on the measurement result (the CINR values of the BS and the adjacent BS) reported by the MSs in the allocated sector, BS 402 determines whether the MSs exist in the interference region or not. Specifically, when the difference between the CINR values of the BS and the adjacent BS is small, or when the CINR value of the BS is smaller than the CINR value of the adjacent BS, BS 402 determines that the MS that has reported those CINR values exists in the interference region. This is because, if an MS exists in the interference region, such as a cell edge and a sector edge, the difference between the CINR values of the administering BS and the adjacent BS is small, or the CINR value of the administering BS is smaller than the CINR value of the adjacent BS.

BS 402 calculates the number of MSs determined to exist in the interference region (the number of the interfering MSs) and reports the calculation result to scheduling device 403 as positional statistics information.

When scheduling device 403 receives positional statistics information from each BS 402 (step 602), scheduling device 403 determines whether or not there is an MS existing in the interference region based on the positional statistics information for each sector (step.603). For a sector for which it is determined that there is no MS existing in the interference region, scheduling device 403 sets the number of subchannels used in the segment region at "0" (step 604). For a sector for which it is determined that there is an MS existing in the interference region, scheduling device 403 calculates the number of subchannels in the segment region corresponding to the number of the interfering MSs (step 605). The number of subchannels in the segment region is equal to the number of the interfering MSs, for example.

Once scheduling device 403 calculates the number of subchannels used in the segment region for each sector, scheduling device 403 informs each BS of the calculation result (step 606).

Based on the number of subchannels that BS 402 reported from scheduling device 403, BS 402 sets the segment region including the number of subchannels in the frame and designates the remaining region as the non-segment region. Then, BS 402 allocates the subchannels in the segment region among the MSs existing in the interference region and allocates the subchannels in the non-segment region among the remaining MSs. If any MS existing in the interference region does not communicate with BS 402 nor request a band, the subchannels in the segment region can be allocated to the MSs that do not exist in the interference region.

Furthermore, BS 402 allocates the transmission power for the sub-carrier that is not used in the BS to the sub-carrier that is used in the BS. In this case, in the example shown in FIG. 3, the CINR value at the MS in the interference region increases by about 4.8 dB. Therefore, BS 402 can transmit user data to the MS existing in the segment region using a modulation method conducted at a high transmission rate.

In the radio communication system according to this exemplary embodiment, the downlink sub-frame is divided into the segment region and the non-segment region along the time axis, and part of the segment region that uses a subchannel that is different from the subchannel used for the adjacent sector is assigned to an MS existing in the interference region. Therefore, in the radio communication system, the BS can separate the subchannel of the allocated sector from the subchannel of the adjacent sector, which is an interference source, along the time axis and the frequency axis.

In addition, since the segment region is allocated among sectors in such a manner that neither adjacent sectors in a cell nor adjacent sectors of adjacent cells share the same subchannel, the inter-sector interference or inter-cell interference at the MS that exists in the interference region is minimized, and therefore, the transmission capacity of each sector increases.

The MS that does not exist in the interference region can use the non-segment region to transmit user data at a transmission rate requested by the MS. In addition, if any MS that exists in the interference region does not request a band, the segment region can be allocated to an MS that does not exist in the interference region.

Since the segment region always includes a sub-carrier that is not used in the BS, even if the power for the sub-carrier is allocated to transmission of the sub-carrier that is used in the BS, there is no possibility that interference will occur because the adjacent sectors are separated along the frequency axis. Therefore, user data can be transmitted using a modulation method conducted at a high transmission rate by concentrating the transmission power on the used sub-carrier in the segment region.

Furthermore, scheduling device 403 has only to inform each BS 402 of the number of sub-carriers provided in the segment region and does not have to conduct complicated information exchange with BS 402. Therefore, channels can be efficiently used according to the situation.

### (Second exemplary embodiment)

Next, a radio communication system according to a second exemplary embodiment will be described with reference to the drawings.

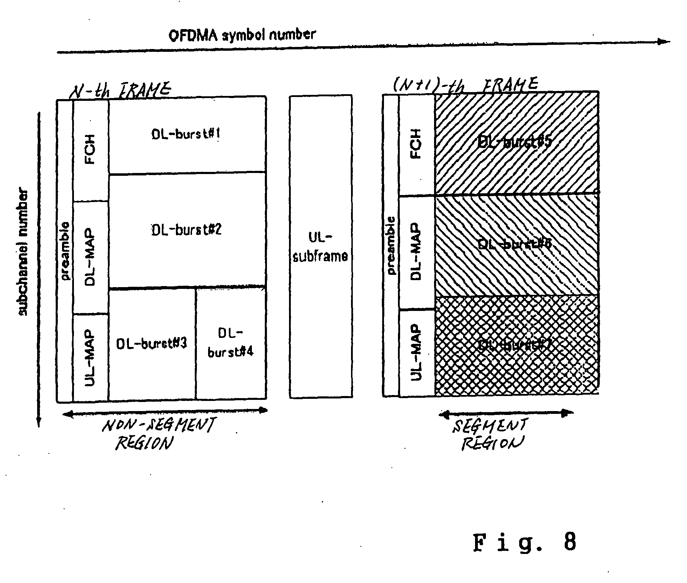

FIG. 8 is a schematic diagram showing a configuration of a frame used in the radio communication system according to the second exemplary embodiment. As in the first exemplary embodiment, FIG. 8 shows a configuration of a downlink sub-frame used for transmission of user data in the forward direction in a 3-sectors-per-cell radio communication system.

As shown in FIG. 8, the radio communication system according to the second exemplary embodiment designates each frame as a segment region or a non-segment region, rather than dividing one frame into the segment region and the non-segment region as in the first exemplary embodiment. That is, the radio communication system according to the second exemplary embodiment produces a non-segment symbol, which is a frame including only a non-segment region, and a segment symbol, which is a frame including only a segment region. User data for an MS that exists in the interference region is assigned to the segment symbol, and user data for an MS that does not exist in the interference region is assigned to the non-segment symbol.

A scheduling device according to the second exemplary embodiment carries out the same process as the process from steps 601 to 603 shown in FIG. 7. For a sector for which it is determined that there is no MS existing in the interference region in step 603, the number of segment symbols is set at "0", and for a sector for which it is determined that there is an MS existing in the interference region, the number of segment symbols corresponding to the number of the interfering MSs is calculated. The number of segment symbols is equal to the number of the interfering MSs, for example.

Once the scheduling device calculates the number of segment symbols for each sector, the scheduling device informs each BS of the number of segment symbols for the BS and the frame number (start frame number) N at which transmission of user data using the segment symbols and the non-segment symbols is started.

Based on the number of segment symbols and the start frame number N reported by the scheduling device, the BS produces a segment symbol and a non-segment symbol. Then, as shown in FIG. 8, the BS transmits the non-segment symbol as an N-th frame, receives user data transmitted from each MS using an uplink frame (UL sub-frame), and then, transmits the segment symbol as a (N+1)-th frame. Next, the BS repeats the same transmission/reception process until the indicated number of segment symbols are transmitted. The remaining configuration and operation are the same as those in the first exemplary embodiment, and therefore, descriptions thereof will be omitted.

As in the first exemplary embodiment, in the radio communication system according to the second exemplary embodiment, the BS allocates the transmission power for the sub-carrier that is not used in the BS to the sub-carrier that is used in the BS in the segment symbol. In this case, in the example shown in FIG. 8, the CINR value at the MS in the interference region increases by about 4.8 dB. Therefore, BS 402 can transmit user data to the MS that exists in the segment region using a modulation method conducted at a high transmission rate.

According to the second exemplary embodiment, in addition to the effects achieved in the first exemplary embodiment, the present invention can be applied to a configuration in which the scheduling device cannot quickly assign channels to each BS, because the segment region and the non-segment region are assigned on a frame basis.

While the invention has been particularly shown and described with reference to exemplary embodiments thereof, the invention is not limited to these embodiments. It will be understood by those ordinarily skilled in the art that various changes in form and details may be made therein without departing from the scope of the present invention as defined by the claims.

An example 1 describes a radio communication system based on an OFDMA system, comprising a base station that is provided for each sector and that communicates with a terminal station by radio,
wherein said base station transmits user data to said terminal station using a frame that is divided along a time axis into:
a segment region used for transmission of the user data to a terminal station that exists in a sector edge or a cell edge, in which a different subchannel is assigned to each sector; and
a non-segment region used for transmission of the user data to a terminal station that does not exist in said sector edge or said cell edge.

An example 2 describes the radio communication system according to example 1, further comprising a scheduling device that calculates the number of interfering terminal stations, which is the number of terminal stations that exist in said sector edge or said cell edge, using positional statistics information reported by said base station that indicates the number of terminal stations that are determined to exist in said sector edge or said cell edge, that determines the number of subchannels in said segment region that are assigned to each base station based on the calculated number of interfering terminal stations, and that informs each base station of the number of subchannels.

An example 3 describes a radio communication system based on an OFDMA system, comprising a base station that is provided for each sector and that communicates with a terminal station by radio,
wherein said base station transmits user data to said terminal station using:
a segment symbol, which is a frame including a segment region used for transmission of the user data to a terminal station that exists in a sector edge or a cell edge, in which a different subchannel is assigned to each sector; and
a non-segment symbol, which is a frame including a non-segment region used for transmission of the user data to a terminal station that does not exist in said sector edge or said cell edge.

An example 4 describes the radio communication system according to example 3, further comprising a scheduling device that determines the number of segment symbols assigned to each base station based on positional statistics information reported by said base station that indicates the number of terminal stations that are determined to exist in said sector edge or said cell edge, and that informs each base station of the determined number of segment symbols and a frame number at which transmission of said user data that uses said segment symbol and said non-segment symbol is started.

An example 5 describes the radio communication system according to any one of examples 1 to 4, wherein said terminal station measures the reception quality of a frame transmitted from the base station that administers the sector in which the terminal station exists and a frame transmitted from the base station that administers a sector adjacent to the sector in which the terminal station exists, and transmits the measurement result to the base station that administers the sector in which the terminal station exists, and
said base station determines whether or not the terminal station exists in said sector edge or said cell edge based on the measurement result of the reception quality received from the terminal station.

An example 6 describes the radio communication system according to any one of examples 1 to 5, wherein said base station allocates a transmission power for a frequency region in the segment region that is not used in the base station to a frequency region that is used in the base station and transmits the user data by selecting a modulation method conducted at a higher transmission rate from among modulation methods available in the OFDMA system.

An example 7 describes a base station that is provided for each sector and that communicates with a terminal station by radio according to an OFDMA system, comprising a radio communication part that transmits user data to said terminal station using a frame that is divided along a time axis into:
a segment region used for transmission of the user data to a terminal station that exists in a sector edge or a cell edge, in which a different subchannel is assigned to each sector; and
a non-segment region used for transmission of the user data to a terminal station that does not exist in said sector edge or said cell edge.

An example 8 describes a base station that is provided for each sector and that communicates with a terminal station by radio based according to an OFDMA system, comprising a radio communication part that transmits user data to said terminal station using:
a segment symbol, which is a frame including a segment region used for transmission of the user data to a terminal station that exists in a sector edge or a cell edge, in which a different subchannel is assigned to each sector; and
a non-segment symbol, which is a frame including a non-segment region used for transmission of the user data to a terminal station that does not exist in said sector edge or said cell edge.

An example 9 describes the base station according to example 7 or 8, wherein said radio communication part determines whether or not the terminal station exists in said sector edge or said cell edge based on the measurement result of the reception quality received from the terminal station.

An example 10 describes the base station according to any one of examples 7 to 9, wherein said radio communication part allocates a transmission power for a frequency region in the segment region that is not used in the base station to a frequency region that is used in the base station and transmits the user data by selecting a modulation method conducted at a higher transmission rate from among modulation methods available in the OFDMA system.

An example 11 describes a radio communication method for transmitting user data to a terminal station according to an OFDMA system from a base station that is provided for each sector, said method comprising:
preparing a frame that is divided along a time axis into, a segment region used for transmission of the user data to a terminal station that exists in a sector edge or a cell edge, in which a different subchannel is assigned to each sector, and a non-segment region used for transmission of the user data to a terminal station that does not exist in said sector edge or said cell edge; and
transmitting user data to said terminal station by using said frame.

An example 12 describes the radio communication method according to example 11, further comprising:
calculating the number of interfering terminal stations, which is the number of terminal stations that exist in said sector edge or said cell edge, using positional statistics information reported by said base station that indicates the number of terminal stations that are determined to exist in said sector edge or said cell edge;
determining the number of subchannels in said segment region that are assigned to each base station based on the calculated number of interfering terminal stations; and
informing each base station of the number of subchannels.

An example 13 describes a radio communication method for transmitting user data to a terminal station according to an OFDMA system from a base station that is provided for each sector, said method comprising:
preparing a segment symbol, which is a frame including a segment region used for transmission of the user data to a terminal station that exists in a sector edge or a cell edge, in which a different subchannel is assigned to each sector;
preparing a non-segment symbol, which is a frame including a non-segment region used for transmission of the user data to a terminal station that does not exist in said sector edge or said cell edge; and
transmitting user data to said terminal station using said segment symbol and said non-segment symbol.

An example 14 describes the radio communication method according to example 13, further comprising:
determining the number of segment symbols assigned to each base station based on positional statistics information reported by said base station that indicates the number of terminal stations that are determined to exist in said sector edge or said cell edge; and
informing each base station of the determined number of segment symbols and a frame number at which transmission of said user data that uses said segment symbol and said non-segment symbol is started.

An example 15 describes the radio communication method according to any one of examples 11 to 14, said terminal station measures the reception quality of a frame transmitted from the base station that administers the sector in which the terminal station exists and a frame transmitted from the base station that administers a sector adjacent to the sector in which the terminal station exists, and transmits the measurement result to the base station that administers the sector in which the terminal station exists, and
said base station determines whether or not the terminal station exists in said sector edge or said cell edge based on the measurement result of the reception quality received from the terminal station.

An example 16 describes the radio communication method according to any one of examples 11 to 15, wherein said base station allocates a transmission power for a frequency region in the segment region that is not used in the base station to a frequency region that is used in the base station and transmits the user data by selecting a modulation method conducted at a higher transmission rate from among modulation methods available in the OFDMA system.

## Claims

1. A radio communication system based on an OFDMA system, comprising a base station that is provided for each sector in a cell of a radio network and that communicates with a terminal station by radio, **characterized in that**
said base station transmits user data to said terminal station using a frame that is divided along a time axis into:
a segment region used for transmission of the user data to a terminal station that exists in a sector edge or a cell edge, in which a different subchannel is assigned to each sector; and
a non-segment region used for transmission of the user data to a terminal station that does not exist in said sector edge or said cell edge;
wherein said non-segment region includes a preamble and a burst section of said frame;
said segment region includes the other burst section that is not used as said non-segment region;
said sector edge is the region where an interference occurs from the terminal station that exists in adjacent sectors; and
said cell edge is the region where an interference occurs from the terminal station that exists in adjacent cells.

2. The radio communication system according to claim 1, further comprising a scheduling device that calculates the number of interfering terminal stations, which is the number of terminal stations that exist in said sector edge or said cell edge, using positional statistics information reported by said base station and indicating the number of terminal stations that are determined to exist in said sector edge or said cell edge, that determines the number of subchannels in said segment region that are assigned to each base station based on the calculated number of interfering terminal stations, and that informs each base station of the number of subchannels.

3. The radio communication system according to claim 1 or 2, wherein said terminal station measures the reception quality of a frame transmitted from the base station that administers the sector in which the terminal station exists and a frame transmitted from the base station that administers a sector adjacent to the sector in which the terminal station exists, and transmits the measurement result to the base station that administers the sector in which the terminal station exists, and
said base station determines whether or not the terminal station exists in said sector edge or said cell edge based on the measurement result of the reception quality received from the terminal station.

4. The radio communication system according to any one of claims 1 to 3, wherein said base station allocates a transmission power for a frequency region in the segment region that is not used in the base station to a frequency region that is used in the base station and transmits the user data by selecting a modulation method conducted at a high transmission rate from among modulation methods available in the OFDMA system.

5. A base station that is provided for each sector in a cell of a radio network and that communicates with a terminal station by radio according to an OFDMA system, **characterized by** a radio communication part that transmits user data to said terminal station using a frame that is divided along a time axis into:
a segment region used for transmission of the user data to a terminal station that exists in a sector edge or a cell edge, in which a different subchannel is assigned to each sector; and
a non-segment region used for transmission of the user data to a terminal station that does not exist in said sector edge or said cell edge;
wherein said non-segment region includes a preamble and a burst section of said frame;
said segment region includes the other burst section that is not used as said non-segment region;
said sector edge is the region where an interference occurs from the terminal station that exists in adjacent sectors; and
said cell edge is the region where an interference occurs from the terminal station that exists in adjacent cells.

6. The base station according to claim 5, wherein said radio communication part determines whether or not the terminal station exists in said sector edge or said cell edge based on a measurement result of a reception quality received from the terminal station.

7. The base station according to claim 5 or 6, wherein said radio communication part allocates a transmission power for a frequency region in the segment region that is not used in the base station to a frequency region that is used in the base station and transmits the user data by selecting a modulation method conducted at a high transmission rate from among modulation methods available in the OFDMA system.

8. A radio communication method for transmitting user data to a terminal station according to an OFDMA system from a base station that is provided for each sector in a cell of a radio network, said method **characterized by**:
preparing a frame that is divided along a time axis into, a segment region used for transmission of the user data to a terminal station that exists in a sector edge or a cell edge, in which a different subchannel is assigned to each sector, and a non-segment region used for transmission of the user data to a terminal station that does not exist in said sector edge or said cell edge; and
transmitting user data to said terminal station by using said frame;
wherein said non-segment region includes a preamble and a burst section of said frame;
said segment region includes the other burst section that is not used as said non-segment region;
said sector edge is the region where an interference occurs from the terminal station that exists in adjacent sectors; and
said cell edge is the region where an interference occurs from the terminal station that exists in adjacent cells.

9. The radio communication method according to claim 8, further comprising:
calculating the number of interfering terminal stations, which is the number of terminal stations that exist in said sector edge or said cell edge, using positional statistics information reported by said base station and indicating the number of terminal stations that are determined to exist in said sector edge or said cell edge;
determining the number of subchannels in said segment region that are assigned to each base station based on the calculated number of interfering terminal stations; and
informing each base station of the number of subchannels.

10. The radio communication method according to claim 8 or 9, said terminal station measures the reception quality of a frame transmitted from the base station that administers the sector in which the terminal station exists and a frame transmitted from the base station that administers a sector adjacent to the sector in which the terminal station exists, and transmits the measurement result to the base station that administers the sector in which the terminal station exists, and
said base station determines whether or not the terminal station exists in said sector edge or said cell edge based on the measurement result of the reception quality received from the terminal station.

11. The radio communication method according to any one of claims 8 to 10, wherein said base station allocates a transmission power for a frequency region in the segment region that is not used in the base station to a frequency region that is used in the base station and transmits the user data by selecting a modulation method conducted at a high transmission rate from among modulation methods available in the OFDMA system.

## Patentansprüche

1. Funkkommunikationssystem basierend auf einem OFDMA-System, das eine Basisstation umfasst, die für jeden Sektor in einer Zelle eines Funknetzwerks vorgesehen ist und die mit einer Endstelle per Funk kommuniziert, **dadurch gekennzeichnet, dass**
die Basisstation Nutzerdaten an die Endstelle überträgt unter Verwendung eines Rahmens, der entlang einer Zeitachse unterteilt ist in:
einen Segmentteil, der für die Übertragung der Nutzerdaten an eine Endstelle verwendet wird, die in einem Sektorrand oder einem Zellrand vorhanden ist, in dem ein unterschiedlicher Subkanal jedem Sektor zugeordnet ist; und
einen Nicht-Segmentteil, der für Übertragung der Nutzerdaten an eine Endstelle verwendet wird, die nicht in dem Sektorrand oder dem Zellrand vorhanden ist;
wobei der Nicht-Segmentteil eine Präambel und einen Bündelabschnitt des Rahmens einschließt;
der Segmentteil den anderen Bündelabschnitt, der nicht als der Nicht-Segmentteil verwendet wird, einschließt;
der Sektorrand der Bereich ist, wo eine Störung von der Endstelle auftritt, die in angrenzenden Sektoren vorhanden ist; und
der Zellrand der Bereich ist, wo eine Störung von der Endstelle, die in angrenzenden Zellen vorhanden ist, auftritt.

2. Funkkommunikationssystem gemäß Anspruch 1, das weiter eine Zeitablaufplanungsvorrichtung umfasst, welche die Anzahl der störenden Endstellen berechnet, welche die Anzahl der Endstellen ist, die in dem Sektorrand oder dem Zellrand vorhanden sind, unter Verwendung von Positionsstatistikinformationen, die durch die Basisstation berichtet werden und die Anzahl der Endstelle zeigen, von denen bestimmt wurde, dass sie in dem Sektorrand oder dem Zellrand vorhanden sind, welche die Anzahl von Subkanälen in dem Segmentteil bestimmt, die jeder Basisstation basierend auf der berechneten Anzahl von störenden Endstellen zugeordnet sind, und welche jede Basisstation über die Anzahl von Subkanälen informiert.

3. Funkkommunikationssystem gemäß Anspruch 1 oder 2, wobei die Endstelle die Empfangsqualität eines Rahmens misst, der von der Basisstation übertragen wurde, die den Sektor verwaltet, in dem die Endstelle vorhanden ist, und eines Rahmens, der von der Basisstation übertragen wird, die einen Sektor angrenzend an den Sektor, in dem die Endstelle vorhanden ist, verwaltet, und das Messergebnis an die Basisstation überträgt, die den Sektor, in dem die Endstelle vorhanden ist, verwaltet, und
die Basisstation bestimmt, ob die Endstelle in dem Sektorrand oder dem Zellrand vorhanden ist oder nicht, basierend auf dem Messergebnis der Empfangsqualität, empfangen von der Endstelle.

4. Funkkommunikationssystem gemäß einem der Ansprüche 1 bis 3, wobei die Basisstation eine Übertragungsleistung für einen Frequenzbereich in dem Segmentteil, der nicht in der Basisstation verwendet wird, einem Frequenzbereich zuordnet, der in der Basisstation verwendet wird, und die Nutzerdaten durch Auswählen eines Modulationsverfahrens überträgt, das bei einer hohen Übertragungsrate durchgeführt wird, unter Modulationsverfahren, die in dem OFDMA-System verfügbar sind.

5. Basisstation, die für jeden Sektor in einer Zelle eines Funknetzwerks vorgesehen ist und die mit einer Endstelle per Funk gemäß einem OFDMA-System kommuniziert, **gekennzeichnet durch** einen Funkkommunikationsteil, der Nutzerdaten an die Endstelle unter Verwendung eines Rahmens überträgt, der entlang einer Zeitachse unterteilt ist in:
einen Segmentteil, der zur Übertragung der Nutzerdaten an eine Endstelle verwendet wird, die in einem Sektorrand oder einem Zellrand vorhanden ist, in dem ein unterschiedlicher Subkanal jedem Sektor zugeordnet ist; und
einen Nicht-Segmentteil, der für Übertragung der Nutzerdaten an eine Endstelle verwendet wird, die nicht in dem Sektorrand oder dem Zellrand vorhanden ist;
wobei der Nicht-Segmentteil eine Präambel und einen Bünde!abschnitt des Rahmens einschließt;
der Segmentteil den anderen Bündelabschnitt einschließt, der nicht als der Nicht-Segmentteil verwendet wird;
der Sektorrand der Bereich ist, wo eine Störung von der Endstelle auftritt, die in angrenzenden Sektoren vorhanden ist; und
der Zellrand der Bereich ist, wo eine Störung von der Endstelle auftritt, die in angrenzenden Zellen vorhanden ist.

6. Basisstation gemäß Anspruch 5, wobei der Funkkommunikationsteil bestimmt, ob die Endstelle in dem Sektorrand oder dem Zellrand vorhanden ist oder nicht, basierend auf einem Messergebnis einer Empfangsqualität, empfangen von der Endstelle.

7. Basisstation gemäß Anspruch 5 oder 6, wobei der Funkkommunikationsteil eine Übertragungsleistung für einen Frequenzbereich in dem Segmentteil, der nicht in der Basisstation verwendet wird, zu einem Frequenzbereich zuordnet, der in der Basisstation verwendet wird, und die Nutzerdaten durch Auswählen eines Modulationsverfahrens, das bei hoher Übertragungsrate durchgeführt wird, unter Modulationsverfahren, die in dem OFDMA-System verfügbar sind, überträgt.

8. Funkkommunikationsverfahren zum Übertragen von Nutzerdaten an eine Endstelle gemäß einem OFDMA-System von einer Basisstation, die für jeden Sektor in einer Zelle eines Funknetzwerks vorgesehen ist, wobei das Verfahren **gekennzeichnet ist durch**:
Erzeugen eines Rahmens, der entlang einer Zeitachse unterteilt ist in einen Segmentteil, der für Übertragung der Nutzerdaten an eine Endstelle verwendet wird, die in einem Sektorrand oder einem Zellrand vorhanden ist, in dem ein unterschiedlicher Unterkanal jedem Sektor zugeordnet ist, und einen Nicht-Segmentteil, der für Übertragung der Nutzerdaten an eine Endstelle verwendet wird, die nicht in dem Sektorrand oder dem Zellrand vorhanden ist; und
Übertragen von Nutzerdaten an die Endstelle **durch** Verwendung des Rahmens;
wobei der Nicht-Segmentteil eine Präambel und einen Bündelabschnitt des Rahmens einschließt;
der Segmentbereich den anderen Bündelabschnitt einschließt, der nicht als der Nicht-Segmentteil verwendet wird;
der Sektorrand der Bereich ist, wo eine Störung auftritt von der Endstelle, die in angrenzenden Sektoren vorhanden ist; und
der Zellrand der Bereich ist, wo eine Störung auftritt von der Endstelle, die in angrenzenden Zellen vorhanden ist.

9. Funkkommunikationsverfahren gemäß Anspruch 8, das weiter umfasst:
Berechnen der Anzahl störender Endstellen, welche die Anzahl von Endstellen ist, die in dem Sektorrand oder dem Zellrand vorhanden ist, unter Verwendung von Positionsstatistikinformationen, die von der Basisstation berichtet werden und die Anzahl von Endstellen zeigen, von denen bestimmt wurde, dass sie in dem Sektorrand oder dem Zellrand vorhanden sind;
Bestimmen der Anzahl von Subkanälen in dem Segmentteil, die jeder Basisstation basierend auf der berechneten Anzahl von störenden Endstellen zugeordnet sind; und
Informieren jeder Basisstation über die Anzahl von Subkanälen.

10. Funkkommunikationsverfahren gemäß Anspruch 8 oder 9, wobei die Endstelle die Empfangsqualität eines Rahmens misst, der von der Basisstation übertragen wird, die den Sektor verwaltet, in dem die Endstelle vorhanden ist, und eines Rahmens, der von der Basisstation übertragen wird, die einen Sektor angrenzend an den Sektor, in dem die Endstelle vorhanden ist, verwaltet, und das Messergebnis an die Basisstation überträgt, die den Sektor verwaltet, in dem die Endstelle vorhanden ist, und
die Basisstation bestimmt, ob die Endstelle in dem Sektorrand oder dem Zellrand vorhanden ist oder nicht, basierend auf dem Messergebnis der Empfangsqualität, empfangen von der Endstelle.

11. Funkkommunikationsverfahren gemäß einem der Ansprüche 8 bis 10, wobei die Basisstation eine Übertragungsleistung für einen Frequenzbereich in dem Segmentbereich, der nicht in der Basisstation verwendet wird, einem Frequenzbereich zuordnet, der in der Basisstation verwendet wird, und die Nutzerdaten durch Auswahl eines Modulationsverfahrens, das bei einer hohen Übertragungsrate durchgeführt wird, unter Modulationsverfahren, die in OFDMA-System verfügbar sind, überträgt.

## Revendications

1. Système de communication radio basé sur un système d'accès OFDMA, comportant une station de base qui est délivrée pour chaque secteur dans une cellule d'un réseau radio et qui communique par radiocommunication avec une station terminale, **caractérisé en ce que** ladite station de base transmet des données utilisateur à ladite station terminale en utilisant une trame qui est divisée le long d'un axe des temps en :
une zone segmentée utilisée pour la transmission des données utilisateur à une station terminale qui est présente au sein d'une limite de secteur ou au sein d'une limite de cellule, dans lequel un sous-canal distinct est affecté à chaque secteur ; et
une zone non segmentée utilisée pour la transmission des données utilisateur à une station terminale laquelle n'est pas présente au sein de la limite de secteur ou au sein de ladite limite de cellule ;
dans lequel ladite zone non segmentée inclut une section de préambule et une section de salve de ladite trame ;
ladite zone segmentée inclut l'autre section de salve laquelle n'est pas utilisée en tant que ladite zone non segmentée ;
ladite limite de secteur est une zone dans laquelle un brouillage est occasionné à partir de la station terminale qui est présente dans les secteurs adjacents ; et
ladite limite de cellule est une zone dans laquelle une interférence est occasionnée à partir de la station terminale qui est présente dans les cellules adjacentes.

2. Système de communication radio selon la revendication 1, comportant en outre un dispositif de planification lequel calcule le nombre de stations terminales brouilleuses, c'est-à-dire le nombre de stations terminales présentes au sein de ladite limite de secteur ou de ladite limite de cellule, en faisant appel à des informations statistiques de positionnement signalées par ladite station de base et en indiquant le nombre de stations terminales qui sont déterminées comme étant présentes au sein de la limite de secteur ou au sein de ladite limite de cellule, déterminant ainsi le nombre de sous-canaux dans ladite zone segmentée qui sont affectés à chaque station de base sur la base du nombre calculé de stations terminales brouilleuses, et informant chaque station de base quant au nombre de sous-canaux.

3. Système de communication radio selon la revendication 1 ou 2, dans lequel ladite station terminale mesure la qualité de réception d'une trame transmise à partir de la station de base qui administre le secteur dans lequel la station terminale est présente et d'une trame transmise à partir de la station de base qui administre un secteur adjacent au secteur dans lequel la station terminale est présente, et transmet le résultat de mesure à la station de base qui administre le secteur dans lequel la station terminale est présente ; et
ladite station de base détermine si la station terminale est présente ou non au sein de la limite de secteur ou au sein de ladite limite de cellule sur la base du résultat de mesure de la qualité de réception reçue par la station terminale.

4. Système de communication radio selon l'une quelconque des revendications 1 à 3, dans lequel ladite station de base affecte une puissance d'émission pour une zone de fréquence dans la zone segmentée qui n'est pas utilisée dans la station de base à une zone de fréquence qui est utilisée dans la station de base et transmet les données utilisateur en sélectionnant un procédé de modulation exécuté à un débit d'émission élevé parmi les différents procédés de modulation disponibles dans le système d'accès OFDMA.

5. Station de base qui est délivrée pour chaque secteur dans une cellule d'un réseau radio et qui communique par radiocommunication avec une station terminale selon un système d'accès OFDMA, **caractérisée en ce qu'**elle comporte une partie de radiocommunication qui transmet des données utilisateur à ladite station terminale en utilisant une trame qui est divisée le long d'un axe des temps en :
une zone segmentée utilisée pour la transmission des données utilisateur à une station terminale qui est présente au sein d'une limite de secteur ou au sein d'une limite de cellule, dans lequel un sous-canal distinct est affecté à chaque secteur ; et
une zone non segmentée utilisée pour la transmission des données utilisateur à une station terminale laquelle n'est pas présente au sein de la limite de secteur ou au sein de ladite limite de cellule ;
dans laquelle ladite zone non segmentée inclut une section de préambule et une section de salve de ladite trame ;
ladite zone segmentée inclut l'autre section de salve laquelle n'est pas utilisée en tant que ladite zone non segmentée ;
ladite limite de secteur est une zone dans laquelle un brouillage est occasionné à partir de la station terminale qui est présente dans les secteurs adjacents ; et
ladite limite de cellule est une zone dans laquelle un brouillage est occasionné à partir de la station terminale qui est présente dans les cellules adjacentes.

6. Station de base selon la revendication 5, dans lequel ladite partie de radiocommunication détermine si la station terminale est présente ou non au sein de la limite de secteur ou au sein de ladite limite de cellule sur la base d'un résultat de mesure d'une qualité de réception reçue par la station terminale.

7. Station de base selon la revendication 5 ou 6, dans lequel ladite partie de radiocommunication affecte une puissance d'émission pour une zone de fréquence dans la zone segmentée qui n'est pas utilisée dans la station de base à une zone de fréquence qui est utilisée dans la station de base et transmet les données utilisateur en sélectionnant un procédé de modulation exécuté à un débit d'émission élevé parmi les différents procédés de modulation disponibles dans le système d'accès OFDMA.

8. Procédé de radiocommunication destiné à transmettre des données utilisateur à une station terminale selon un système d'accès OFDMA à partir d'une station de base qui est délivrée pour chaque secteur dans une cellule d'un réseau radio, ledit procédé étant **caractérisé en ce qu'**il comporte les étapes ci-dessous consistant à _{:}
préparer une trame qui est divisée le long d'un axe des temps en une zone segmentée utilisée pour la transmission des données utilisateur à une station terminale qui est présente au sein d'une limite de secteur ou au sein d'une limite de cellule, dans laquelle un sous-canal distinct est affecté à chaque secteur, et une zone non segmentée utilisée pour la transmission des données utilisateur à une station terminale laquelle n'est pas présente au sein de la limite de secteur ou au sein de ladite limite de cellule ; et
transmettre des données utilisateur à ladite station terminale en faisant appel à ladite trame ;
dans lequel ladite zone non segmentée inclut une section de préambule et une section de salve de ladite trame ;
ladite zone segmentée inclut l'autre section de salve qui n'est pas utilisée en tant que ladite zone non segmentée ;
ladite limite de secteur est une zone dans laquelle un brouillage est occasionné à partir de la station terminale qui est présente dans les secteurs adjacents ; et
ladite limite de cellule est une zone dans laquelle un brouillage est occasionné à partir de la station terminale qui est présente dans les cellules adjacentes.

9. Procédé de radiocommunication selon la revendication 8, comportant en outre les étapes ci-dessous consistant à _{:}
calculer le nombre de stations terminales brouilleuses, c'est-à-dire le nombre de stations terminales présentes au sein de ladite limite de secteur ou de ladite limite de cellule,
faire appel à des informations statistiques de positionnement signalées par ladite station de base et indiquer le nombre de stations terminales qui sont déterminées comme étant présentes au sein de la limite de secteur ou au sein de ladite limite de cellule ;
déterminer le nombre de sous-canaux dans ladite zone segmentée qui sont affectés à chaque station de base sur la base du nombre calculé de stations terminales interférentes ; et
informer chaque station de base quant au nombre de sous-canaux.

10. Procédé de radiocommunication selon la revendication 8 ou 9, dans lequel ladite station terminale mesure la qualité de réception d'une trame transmise à partir de la station de base qui administre le secteur dans lequel la station terminale est présente et d'une trame transmise à partir de la station de base qui administre un secteur adjacent au secteur dans lequel la station terminale est présente, et transmet le résultat de mesure à la station de base qui administre le secteur dans lequel la station terminale est présente, et
ladite station de base détermine si la station terminale est présente ou non au sein de la limite de secteur ou au sein de ladite limite de cellule, sur la base du résultat de mesure de la qualité de réception reçue par la station terminale.

11. Procédé de radiocommunication selon l'une quelconque des revendications 8 à 10, dans lequel ladite station de base affecte une puissance d'émission pour une zone de fréquence dans la zone segmentée qui n'est pas utilisée dans la station de base à une zone de fréquence qui est utilisée dans la station de base, et transmet les données utilisateur en sélectionnant un procédé de modulation exécuté à un débit d'émission élevé parmi les différents procédés de modulation disponibles dans le système d'accès OFDMA.
